# EUROPEAN PATENT APPLICATION

(11) **EP 4 596 395 A1**
(43) Date of publication of application: **06.08.2025**
(21) Application number: 24154888.2
(22) Date of filing: 31.01.2024
(51) Int. Cl.: B64C 1/14

(54) **AIRCRAFT DOOR HAVING A REINFORCEMENT FRAME STRUCTURE AND METHOD FOR MANU-FACTURING SUCH AN AIRCRAFT DOOR**

(71) Applicant: Airbus Operations GmbH, 21129 Hamburg (DE)
(72) Inventor: Martin, Alexander, 21129 Hamburg (DE)

(57) **Abstract**

The present invention provides an aircraft door (120), in particular aircraft cargo door having a reinforcement frame structure (110), wherein the reinforcement frame structure (110) comprises a plurality of vertically extending ribs (101) and at least one beam (107) extending essentially orthogonally with respect to the ribs (101), with each of the ribs (101) comprising a first rib section (103) and a second rib section (104) each having upper ends (200) and lower ends (300), with in an assembled condition the lower ends (300) of the first rib sections (103) facing the upper ends (200) of the second rib sections (104) wherein said ends (200, 300) are independently connected with the beam (107). The present invention further provides a method of manufacturing a reinforcement frame structure (110) of an aircraft door (120) and an aircraft (400) comprising at least one such aircraft door (120).

## Description

The present invention pertains to an aircraft door having a reinforcement frame structure and method for manufacturing such an aircraft door.

Although it can be used in many applications, the present invention and the problems underlying it are explained in greater detail in relation to passenger or cargo aircraft. However, the methods and devices described can likewise be used in vehicles in all sectors of the transport industry, e.g. for road vehicles, for rail vehicles, for general aircraft or for watercraft.

Aircraft doors, especially aircraft cargo doors are provided with reinforcement frame structures on the side facing the inner compartment of an aircraft, in particular aircraft cargo bays. Such reinforcement frame structures comprise a longitudinal rib structure having a plurality of ribs extending vertically with respect to the door plane. The ribs are connected to a horizontal beam spanned by the ribs. Upper sections of the ribs can comprise means to attach the aircraft door to a pivoting mechanism allowing pivoting the door inward or outwards with respect to the aircraft fuselage for opening and closing the aircraft door, respectively. Lower sections of the ribs may include means for engaging with a locking mechanism of the aircraft and are usually configured as a frame fork. Ribs are manufactured from a plurality of individual parts assembled to form the final rib. The production of these individual parts is associated with a high and time-consuming use of machinery. In addition, several clamping devices must be used to produce the frame structure from the plurality of individual parts. Most of the individual parts are manufactured from a solid material using a milling process. On the one hand, this is associated with a high input of raw material and, on the other, with high material waste during machining. Added to this are longer processing times and the associated costs.

Against this background, it is an object of the present invention to find a solution for manufacturing reinforcement frame structures of aircraft doors which require less machining, allow for a faster assembly using less clamping devices and reduce weight due to decreased material use.

This object is achieved by an aircraft door having the features of claim 1 and a method having the features of claim 11.

According to a first aspect of the invention, an aircraft door, in particular aircraft cargo door is provided having a reinforcement frame structure, wherein the reinforcement frame structure comprises a plurality of vertically extending ribs and at least one beam extending essentially orthogonally with respect to the ribs. The ribs comprise a first rib section and a second rib section each having first i.e. upper and second i.e. lower ends. In an assembled condition the lower ends of the first rib sections face the upper ends of the second rib sections wherein said ends are independently connected with the beam.

The rib sections as well as the horizontal beam are provided as semifinished parts and combined during manufacture to form the final reinforcement frame structure thereby involving less clamping devices and manufacturing steps and reducing weight of the entire structure.

A further aspect of the invention lies in a method of manufacturing a reinforcement frame structure of an aircraft door, comprising inserting the horizontal beam into a first clamping device, aligning the first i.e. lower ends of the first rib sections and the second i.e. upper ends of the second rib sections with connecting means provided on both sides of the beam and connecting the lower ends of the first rib sections and the upper ends of the second rib sections with the connecting means protruding respectively on both sides of the beam facing the rib sections thereby reducing the number of individual assembly steps during manufacturing the individual components of the ribs as well as the of the final reinforcement frame structure and aircraft door.

A further aspect of the invention lies in an aircraft provided with at least one aircraft door having such reinforcement frame structure.

Advantageous embodiments and further developments are apparent from the further dependent claims and from the description with reference to the figures.

According to another aspect of the invention, the beam, extending in particular in a horizontal direction with respect to the aircraft door plane, provides a plurality of connecting means protruding essentially orthogonally with respect to a longitudinal axis of the beam. These connecting means are directed towards the ends of the rib sections facing each other, wherein the connecting means preferably comprise connecting shanks to accommodate said ends. The connecting means or the connecting shanks are provided on a first and a second side of the beam facing the rib sections, respectively. This provides an advantage in manufacturing the finished reinforcement frame structure of an aircraft door since the beam can be provided as one piece with the rib sections being connected to the beam in a simple and time as well cost saving manner. The number of parts required to form the ribs as well as the final reinforcement frame structure can be significantly reduced. This results in reduced machining and assembly times and reduced material required thus reducing the overall weight of the frame structure and aircraft door. Furthermore, only one single clamping devices is needed to assemble the final structure.

According to an embodiment of the aircraft door, said ends of the first and second rib sections are connected to the connecting means by one of a screwed, welded or riveted joint. When employing a riveted joint preferably an axially oriented rivet is used to connect the respective ends of the first and second rib sections to the connecting means or the connecting shanks. This can provide an advantage during the manufacturing of the reinforcement frame structure by facilitating the assembly process in less time and with reduced material use.

According to a further embodiment of the aircraft door the lower rib sections are configured as frame fork structures each having two preferably independent fork legs, wherein each fork leg is connected independently with the connecting shanks on the first side of the beam to form the finished frame fork. It is an advantage of this embodiment that less material and machining, in particular milling is employed when producing the frame forks thereby achieving the same effects and benefits with respect to load bearing and functionality. Furthermore, the fork structure is produced from less material and has a lower weight resulting in an overall weight reduction of the reinforcement frame structure and finished aircraft door. The invention is not restricted to the use of fork structures having two independent fork legs but also encompasses fork structures provided as one piece to be connected to the connection means protruding from the beam as described above.

According to a further embodiment of the aircraft door the connection means are formed integrally with the beam during manufacture of the beam as one piece. As an alternative and likewise encompassed by the invention, the connection means are provided as separate parts that are insertable into the semifinished beam. It is an advantage of this embodiment, that the beam can be manufactured as one piece and consequently avoids the requirement of using a further device clamping individual sections of the beam during assembly of the reinforcement frame structure.

According to a further embodiment of the aircraft door, each of the upper rib sections comprises a plurality of subsections interconnected to form the upper rib sections. This allows for preassembly of the upper rib sections from the plurality of semifinished subsection parts reducing the overall amount of material employed and assembly steps required. During manufacture of the reinforcement frame structure the upper rib section is provided as one piece for connection with the beam via the connecting means provided therein.

In an embodiment the beam is preferably configured as a one-piece beam. As an alternative the beam may be composed of connected parts being provided as semifinished subsections of the beam connected to form the one-piece beam to be employed in the reinforcement frame structure of the invention aircraft door. This allows for preassembly of the beam from the plurality of semifinished subsection parts reducing the overall amount of material employed and assembly steps required. During manufacture of the reinforcement frame structure the beam is provided as one piece for connection with the rib sections via the connecting means provided on or in the beam.

Preferably the first rib sections and the second rib sections are each manufactured independently as one of milled, cast or forged parts. It is considered advantageous, that based on the selection of the respective manufacturing process of the individual parts, manufacturing times and costs can be adjusted and the weight of the parts and thus of the entire reinforcement frame structure can be reduced without changing or impairing the overall properties regarding rigidity, load transfer and stability of the reinforcement frame structure.

According to a further embodiment of the aircraft door, at least one horizontally aligned stiffening beam or stiffening beam section is arranged between the vertically extending ribs. It is considered advantageous in this embodiment, that the reinforcement frame structure can be further improved with regard to rigidity, load transfer and stability of the reinforcement frame structure in a simple and cost-efficient way.

According to a further embodiment of the aircraft door, the connecting portion of the beam and the upper rib section and the lower rib section is covered and connected by at least one gusset plate attached to the beam and the upper rib section and the lower rib section on at least one of a first and a second side of the reinforcement frame structure, wherein the gusset plate can be provided as at least one of a separate part connected to the beam, the upper rip section and the lower rib section, a part incorporated in the beam during manufacture and a part incorporated in an outer and an inner layer of the aircraft door and connected to the reinforcement frame structure during assembly. It is considered advantageous in this embodiment, that the connection between the elements of reinforcement frame structure can be further improved with regard to rigidity, load transfer and stability of the reinforcement frame structure.

According to a further embodiment of the aircraft door, at least one reinforcement element in the form of an L-shaped angle plate is provided connected to a lower end of the upper rip section and the beam, wherein shanks of the at least one L-shaped angle plate extend in a longitudinal direction of the upper rip section and the longitudinal direction of the beam. The shanks of the at least one L-shaped angle plate are connected to the beam and the upper rip sections by suitable connecting means, such as rivets or screws. L-shaped angle plates can be provided on either of one or both sides of the upper rip section. In a further embodiment, the lower end of the upper rip section can have a configuration on at least one side, such as a slot or a pocket that is suitable for partially overlapping leg of the L-shaped angle plate thus further improving the stability of the configuration and load transfer. The embodiment as described has the advantage that the reinforcement frame structure can be adapt to various load carrying requirements and directions of load introduction.

With the invention aircraft door an advantageous reduction of material use, manufacturing steps and number of clamping devices required during assembly of the reinforcement frame structure provided in the aircraft door can be achieved while mechanical and structural properties of the reinforcement frame structure can be sustained and overall weight be reduced. The invention aircraft door provides the same properties as aircraft doors having reinforcement frame structures manufactured in state-of-the-art processes thereby fulfilling the quality requirements and meeting the related regulations for aircraft parts.

According to a further embodiment of the method, at least one of the of first rib sections and second rib sections is inserted into a second clamping device before connecting with the connection means of the horizontal beam. This allows for an advantageously easy establishment of the connection between ribs sections with the invention method and can be used to carry out tolerance levelling during assembly of the reinforcement frame structure before connecting the rib sections to the beam.

According to a further embodiment of the method, the lower ends of the first rib sections and the upper ends of the second rib sections are connected to the connecting means by one of a screwed, welded or riveted joint. When establishing a connection using a riveted joint preferably axially oriented riveted joint are employed. This has the advantage, that the overall number of joints is reduced thereby decreasing manufacturing times, material employed and the weight of the final structure and aircraft door.

According to a further embodiment the method the connecting means comprise connecting shanks and the respective ends of the first and the second rib sections are connected with the connection shanks. This has the advantage, that the beam can be provided as one piece and connecting the rib sections to the beam can be established in an easy and fast way by only interconnecting the shanks with the ends of the rib sections. This results in reduction of the number of clamping devices employed and manufacturing steps needed to establish the final reinforcement frame structure.

Preferably at least one horizontally aligned stiffening beam is arranged between the ribs after or during assembly of the reinforcement frame structure. The stiffening beam or stiffening beam sections are affixed to the rib sections and have the advantage that the reinforcement frame structure can be further improved regarding rigidity, load transfer and stability of the reinforcement frame structure in a simple and cost-efficient way.

With the invention method an advantageous reduction of material use, manufacturing steps and number of clamping devices required during assembly of the reinforcement frame structure provided in the aircraft door can be achieved while mechanical and structural properties of the reinforcement frame structure can be sustained and overall weight be reduced.

The invention will be explained in greater detail with reference to exemplary embodiments depicted in the drawings as appended.
- Fig. 1: schematically depicts an exploded view of a reinforcing frame part according to the state of the art;
- Fig. 2: schematically depicts an exploded view of a reinforcing frame structure according to an embodiment of the invention; and
- Fig. 3: schematically depicts an aircraft with aircraft doors according to another embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

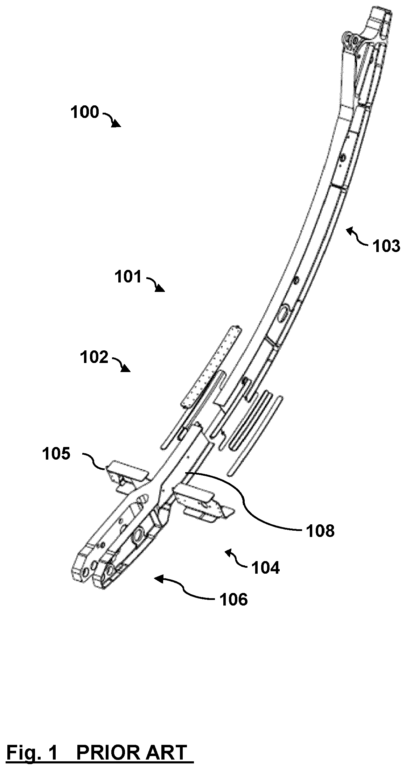

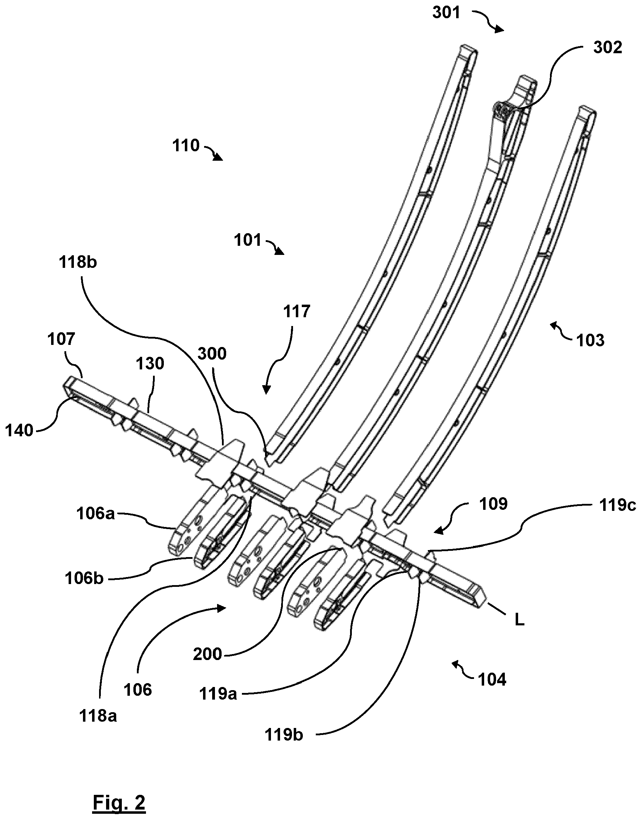

Fig. 1 schematically depicts an exploded view of a prior art reinforcement frame structure part 100. Fig. 1 depicts a single rib 101 installed in the finalized reinforcement frame structure 110 of an aircraft door 120, in particular an aircraft cargo door as schematically depicted in Fig. 2. Reinforcement frame structures 110 of aircraft doors 120 typically comprise a plurality, preferably at least four rib structures 101 as depicted in Fig. 1. Such structures comprising a plurality of ribs 101 are assembled from a plurality of individual parts 102 and in processes employing several clamping mechanisms holding the plurality of individual parts 102 during assembly. Fig. 1 depicts an upper rib section 103 and a lower rib section 104 as well as beam sections 105 forming a connection beam structure extending orthogonally with respect to the rib structure 101 in the assembled state of the finished reinforcement frame structure 110 (as shown in Fig. 2). The lower rib section 104 is configured as a frame fork 106 with the beam sections 105 being connected to a protrusion 108 extending towards the upper rib section 103 being affixed thereto during assembly. To assemble the final reinforcement frame structure 110 a plurality of clamping devices is needed to hold the individual parts in place and assembly is thus time consuming. Furthermore, manufacturing the semi-finished parts requires extended milling with considerable amounts of starting material and related costs. Due to the amount of material and number of parts employed the weight of the finalized structure is comparably high.

Fig. 2 schematically depicts an exploded view of a reinforcing frame structure 110 according to an embodiment of the invention. The reinforcing frame structure 110 comprises a plurality of vertically aligned ribs 101 as well as a horizontally extending beam 107. While Fig. 2 depicts only three of the vertically aligned ribs 101, the invention aircraft door 120 is not limited to this number and may comprise more, in particular at least four to eight of the ribs 101 in each aircraft door 120. The ribs 101 each comprise a first upper rib section 103 and a second lower rib section 104 each having upper ends 200 and lower ends 300. In an assembled condition the lower ends 300 of the first rib upper sections 103 face the upper ends 200 of the second lower rib sections 104 wherein said ends 200, 300 are independently connected with the beam 107. The rib sections 103, 104 as well as the horizontal beam 107 are provided as semifinished parts each having a one-piece configuration and combined during manufacture to form the final reinforcement frame structure 110 thereby involving fewer clamping devices and manufacturing steps. To adapt to load carrying and load introduction requirements at least one additional reinforcement element in the form of at least one L-shaped angle plate (not shown) can be connected to at least one lower end 300 of the upper rip section 103 and the beam 107. The shanks of the at least one L-shaped angle plate thereby extend in the longitudinal direction of the upper rip sections 103 and the longitudinal direction of the beam 103 and are connected to the beam 107 and the upper rip sections 103 by suitable connecting means, such as rivets or screws. L-shaped angle plates can be provided on either of one or both sides of the upper rip section 103.

In a further embodiment (not shown), the lower end 300 of the upper rip section 103 can have a configuration on at least one side, such as a slot or a pocket that is suitable for partially overlapping the leg of the L-shaped angle plate.

The beam 107 as depicted in Fig. 2 extends in a horizontal direction and provides a plurality of connecting means 109 protruding orthogonally therefrom with respect to a longitudinal axis L of the beam 107. The connecting means 109 are directed towards the ends 200, 300 of the rib sections 103, 104 facing each other. The connecting means 109 comprise connecting shanks 119 a, b, c to accommodate said ends 200, 300. A first set of connecting shanks 119 a, b is provided on a first side 130 of the beam 107 facing towards the lower rib section 103 whereas a second set of connecting shanks 119 c is provided on a second side 140 of the beam 107 facing towards the upper rib section 104. In the embodiment of Fig. 2 two connecting shanks 119 a, b are provided that extend towards the upper ends 200 of the lower rib sections 104 and a single connecting shank 119 c is provided that extends towards the lower end 300 of the upper rib section 103.

In the embodiment of Fig. 2 the connection means 109 are formed integrally with the beam 107 during manufacture of the beam 107 as one piece. As an alternative the connection means 109 can be provided as separate parts that are insertable into the semifinished beam 107.

During assembly protruding sections of the upper rib section 103 and the lower rib section 104 are connected to the connection shanks 119a, b, c. This allows for providing the beam 107 as one piece with the rib sections 103, 104 being connected to the beam 107 in a simple and time as well cost saving manner. This results in reduced machining and assembly times and reduced material required thus reducing the overall weight of the reinforcement frame structure 110 and aircraft door 120. Furthermore, only one single clamping devices is needed to assemble the final structure. In an embodiment of the invention referred to in Fig. 2, the connecting portions 117 of the beam 107 and the upper rib section 103 and the lower rib section 104 are covered and connected by gusset plates 118a, 118b attached to the beam 107 and the upper rib section 103 and the lower rib section 104, respectively. Connection is established in particular by a rivet, screw or a welding connection. Size and configuration of the gusset plates 118a, 118b provide a firm connection between the upper rib section 103, the lower rib section 104 and the beam 107 and can be adapted to the load introduction requirements. The gusset plates 118a, 118b can be provided as one of a separate part connected to the beam 107, the upper rip section 103 and the lower rib section 104, and a part incorporated in the beam 107 during manufacture, and a part incorporated in the outer and inner layer (not shown) and connected to the reinforcement frame structure 110 during assembly of the aircraft door 120.

In the assembled state, the ends 200, 300 of the first rib section 103 and the second rib sections 104 are connected to the connecting shanks 119 a, b, c by means of an axially oriented riveted joint (not shown) in an embodiment of the invention aircraft door 120.

In the embodiment of Fig. 2 the lower rib sections 104 are configured as a frame fork 106 each having two independent fork legs 106a, b, wherein each fork leg 106 a, b is connected independently with the connecting shanks 119 a, b on the first side 130 of the beam 107. Less material and machining, in particular milling is employed when producing the fork legs 106a, b thereby however achieving the same effects and benefits with respect to load bearing and functionality. Furthermore, the frame fork 106 is produced from less material and has a lower weight resulting in an overall weight reduction of the reinforcement frame structure 110 and finished aircraft door 120. The invention is not restricted to the use of frame fork 106 having two independent fork legs 106 a, b but also encompasses frame forks 106 provided as one piece to be connected to the connection shanks 119 a, b adapted for this purpose, accordingly and protruding from the beam 107 as described above.

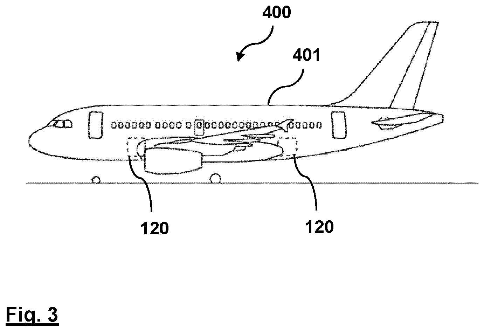

Fig. 3 schematically depicts schematically depicts an aircraft 400 supplied with aircraft doors 120 configured according to an embodiment of the invention as aircraft cargo doors closing an aircraft cargo bay. Aircraft doors 120 according to the invention, are provided with reinforcement frame structures 110 on the side facing the inner compartment of the aircraft 400, in particular the aircraft cargo bay. The reinforcement frame structures 110 comprise longitudinal rib structure having a plurality of ribs 101 extending vertically with respect to the aircraft door 120 plane. Upper end regions 301 of the ribs 101 can comprise attachment means 302 to attach the aircraft door 120 to a pivoting mechanism (not shown) allowing pivoting the aircraft door 120 inward or outwards with respect to the aircraft fuselage 401 for opening and closing the aircraft cargo bay, respectively.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: reinforcement frame structure part
- 101: rib
- 102: individual parts
- 103: upper rib section
- 104: lower rib section
- 105: beam section
- 106: frame fork
- 107: beam
- 108: protrusion
- 109: connecting means
- 110: reinforcement frame structure
- 117: connecting portion
- 118 a, b: gusset plate
- 119 a, b, c: connecting shank
- 120: aircraft door
- 130: first side
- 140: second side
- 200: upper end
- 201: attachment means
- 300: lower end
- 301: end region
- 302: attachment means
- 400: aircraft
- 401: aircraft fuselage
- L: longitudinal axis

## Claims

1. Aircraft door (120), in particular aircraft cargo door having a reinforcement frame structure (110), wherein the reinforcement frame structure (110) comprises a plurality of vertically extending ribs (101) and at least one beam (107) extending essentially orthogonally with respect to the ribs (101) , with each of the ribs (101) comprising a first rib section (103) and a second rib section (104) each having upper ends (200) and lower ends (300), with in an assembled condition the lower ends (300) of the first rib sections (103) facing the upper ends (200) of the second rib sections (104) wherein said ends (200, 300) are independently connected with the beam (107).

2. Aircraft door (120) according to claim 1, wherein the beam (107) provides a plurality of connecting means (109) protruding orthogonally with respect to a longitudinal axis (L) of the beam (107) towards the ends (200, 300) of the rib sections (103, 104) facing each other, wherein the connecting means (109) comprise connecting shanks (119 a, b, c) to accommodate said ends (200, 300) on a first side (130) and a second side (140) of the beam (107), respectively.

3. Aircraft door (120) according to claim 1 or 2, wherein said ends (200, 300) of the first rib sections (103) and the second rib sections (104) are connected to the connecting means (109) by one of a screw, welded or preferably axially oriented riveted joint.

4. Aircraft door (120) according to any one of claims 1 to 3, wherein the lower rib sections (103) are configured as frame fork (106) each having two preferably independent fork legs (106 a, b), wherein each fork leg (106 a, b) is connected independently with the connecting shanks (119 a, b, c) on a side (130, 140) of the beam (107) to form the frame fork (106).

5. Aircraft door (120) according to any one of claims 1 to 4, wherein the connection means (109) are formed integrally with the beam (107) or wherein the connection means (109) are provided as separate parts insertable into the beam (107).

6. Aircraft door (120) according to any one of claims 1 to 5, wherein each of the upper rib sections (103) comprises a plurality of subsections interconnected to form the upper rib sections (103).

7. Aircraft door (120) according to any one of claims 1 to 6, wherein the beam (107) is configured as a one-piece beam (107) or as a beam (107) composed of connected parts.

8. Aircraft door (120) according to any one of claims 1 to 7, wherein the at least one horizontally aligned stiffening beam or stiffening beam section is arranged between the vertically extending ribs (101).

9. Aircraft door (120) according to any one of claims 1 to 8, wherein the connecting portion (117) of the beam (107) and the upper rib section (103) and the lower rib section (104) is covered and connected by at least one gusset plate (118a, b) attached to the beam (107) and the upper rib section (103) and the lower rib section (104) on at least one of a first and a second side of the reinforcement frame structure (110), wherein the gusset plate (118a, b) can be provided as at least one of a separate part connected to the beam (107), the upper rip section (103) and the lower rib section (104), a part incorporated in the beam (107) and a part incorporated in an outer and an inner layer of the aircraft door and connected to the reinforcement frame structure 110 during assembly.

10. Aircraft door (120) according to any one of claims 1 to 10, wherein at least one reinforcement element in the form of an L-shaped angle plate is provided connected to a lower end (300) of the upper rip section (103) and the beam (107), wherein shanks of the at least one L-shaped angle plate extend in a longitudinal direction of the upper rip section (103) and the longitudinal direction of the beam (107).

11. An aircraft (400) provided with at least one aircraft door (120) according to any one of claims 1 to 9, wherein the aircraft door (120) is preferably configured as an aircraft cargo door.

12. A method of manufacturing a reinforcement frame structure (110) of an aircraft door (120) according to any one of claims 1 to 9, comprising inserting the horizontal beam (107) into a first clamping device, aligning the lower ends (300) of the first rib sections (103) and the upper ends (200) of the second rib sections (104) with the connecting means (109) projecting on both sides (130, 140) of the beam and connecting the lower ends (300) of the first rib sections (103) and the upper ends (200) of the second rib sections (104) with the connecting means (109) protruding respectively on both longitudinally extending sides (130, 140) of the beam (107).

13. Method according to claim 11, wherein at least one of the of first rib sections (103) and second rib sections (104) is inserted into a second clamping device before connecting with the beam (107) aligned essentially orthogonally thereto.

14. Method according to claim 11 or 12, wherein the lower ends (300) of the first rib sections (103) and the upper ends (200) of the second rib sections (104) are connected to the connecting means (109) by one of a screw, welded or preferably axially oriented riveted joint.

15. Method according to any one of claims 11 to 13, wherein the connecting means (109) comprise connecting shanks (119 a, b, c) and the respective ends (200, 300) of the first rib section (103) and the second rib sections (104) are connected to the connection shanks (119 a, b, c).
